# EUROPEAN PATENT APPLICATION

(11) **EP 1 481 994 A1**
(43) Date of publication of application: **01.12.2004**
(21) Application number: 03012049.7
(22) Date of filing: 28.05.2003
(51) Int. Cl.: C08F 110/02

(54) **Novel polymerisation catalyst**

(71) Applicant: Borealis Technology Oy, 06101 Porvoo (FI)
(72) Inventor: Varzeshkhah, Riitta, 06100 Porvoo (FI); Eloranta, Kirsi, 06450 Porvoo (FI); Young, Koo So, 00810 Helsinki (FI)
(74) Representative: Kador & Partner

(57) **Abstract**

A process for producing a procatalyst for the production of linear low density ethylene polymers comprising the steps of contacting:
(a) an inorganic support;
(b) an aluminium compound of formula (1):

   R₃₋ₙAlClₙ (1)

   wherein R is a C₁-C₂₀ hydrocarbyl group or a C₁-C₂₀ hydrocarboxy group, n is 1 or 2;
(c) a compound/mixture comprising hydrocarbyl and/or hydrocarbyl oxide linked to magnesium;
(d) a titanium compound of formula (2):

   (OR')₄₋ₓTiClₓ (2)

   wherein R' is a C₂-C₂₀ hydrocarbyl group and X is an integer from 0 to 4;
(e) an electron donor.

The invention also included a method for preparing a polymerisation catalyst, components thereof, and polyethylene produced using said catalysts.

## Description

### Field of the Invention

The present invention is directed to a polymerisation catalyst, which is suitable for producing linear copolymers of ethylene having low to medium density. Especially, the catalyst is suitable for producing linear low-density polyethylene having a high molecular weight and which does not cause fouling in the polymerisation reactor. In particular, the catalyst has a high activity over a wide range of polymerisation conditions and does not significantly lose its activity at high hydrogen concentrations when a polymer having a low molecular weight is produced.

### Prior Art

The document EP-B-688794 discloses a catalyst for ethylene polymerisation. The catalyst was prepared by contacting a particulate support with a chlorinating metal compound, a magnesium compound having both alkyl and alkoxy groups attached to magnesium and a titanium compound. The resulting catalyst had a good and balanced activity in ethylene polymerisation over a wide range of hydrogen concentration.

Another document, US-B-6303716, discloses a catalyst prepared by first treating silica with an aluminium alkyl compound. Then, a magnesium halide in the nascent state is dissolved in an electron donor. To this solution a titanium compound added. This mixture is then contacted with silica. Finally, the supported component is contacted with an electron donor to produce the solid catalyst component. The catalyst was reported to be suitable for production of low-, medium- and high-density ethylene polymers. Further, it was reported to avoid the formation of agglomerates in gas phase polymerisation and have a high sensitivity to modification by hydrogen.

One problem that is often encountered with the prior art catalysts is that it is difficult to produce an ethylene copolymer having a very high molecular weight and a low density. Especially this problem is apparent when producing a bimodal ethylene copolymer, where, for instance, in the first stage a low molecular weight copolymer component is produced in the presence of a high concentration of hydrogen. The hydrocarbons are then separated from the polymer, which is directed to the second polymerisation stage to produce the high molecular weight copolymer component. At this stage the concentration of hydrogen needs to be low. As it is impossible to remove the hydrocarbons completely from the polymer, a small stream of hydrogen is carried over from the first polymerisation stage to the second polymerisation stage. If the catalyst is very sensitive to hydrogen, then the molecular weight of the polymer component produced in the second stage is reduced by the hydrogen carried over from the first polymerisation stage. This makes it impossible to produce bimodal ethylene copolymers having a high weight average molecular weight and a low density. The catalysts disclosed in EP-B-688794 tend to suffer from this problem.

Another problem encountered with the prior art catalysts is that they tend to produce a polymer having a broad composition distribution. Then, a significant fraction of the polymer chains have a very high content of comonomer, while most of the chains contain only a small amount of comonomer, or no comonomer at all. The presence of the chains rich in comonomer is seen as a high fraction of xylene soluble polymer. Such polymer may cause fouling of the reactor in the polymerisation process. The formation of chunks and other agglomerates in a gas phase reactor may be caused by the presence of such polymer chains.

A third problem often encountered with prior art catalysts is the loss of activity when the hydrogen concentration in the polymerisation medium is high. This makes it difficult for them to produce polymers having a low molecular weight, of less than 50000 g/mol. The catalysts of the type US-B-6303716 tend to suffer from this problem.

### Description of the Invention

### Definitions

The terms 'solid catalyst component' and 'procatalyst' refer to the solid supported catalyst component.

The terms 'catalyst' or 'polymerisation catalyst' refer to the active catalyst, which has been obtained by activating the solid catalyst component with the cocatalyst.

The terms 'linear low density polyethylene' or 'linear low density ethylene polymer' refers to a copolymer of ethylene, which has been obtained by copolymerising ethylene with a comonomer in the presence of a Ziegler-Natta catalyst and which copolymer has a density of from 905 to 935 kg/m³.

### Summary of the Invention

One aspect of the present invention is to provide a procatalyst for the production of linear low density ethylene polymers, where the catalyst component is obtainable by the process comprising the steps of contacting: (a) an inorganic support, (b) an aluminium compound, or mixtures thereof, of formula (1):

R₃₋ₙAlClₙ (1)

wherein R is a C₁-C₂₀ hydrocarbyl group or a C₁-C₂₀ hydrocarbyloxy group and n is a number in the range of and including 1 to 2, (c) a compound or mixture containing hydrocarbyl and/or hydrocarbyl oxide linked to magnesium, (d) a titanium compound having the formula (2):

(OR')₄₋ₓTiClₓ (2)

wherein R' is a C₂-C₂₀ hydrocarbyl group and x is an integer from 0 to 4, and (e) an electron donor compound selected from the group of benzoates, phthalates, diethers and succinates.

Another aspect of the invention is to provide a method of preparing a polymerisation catalyst component for the production of linear low density ethylene polymers, the method comprising the steps of contacting: (a) an inorganic particulate support, (b) an aluminium compound, or mixtures thereof, of formula (1) above, (c) a compound or mixture containing hydrocarbyl and/or hydrocarbyl oxide linked to magnesium, (d) a titanium compound having the formula (2) above, and (e) an electron donor compound selected from the group of benzoates, phthalates, diethers and succinates.

One more aspect of the invention is to provide a polymerisation catalyst comprising (I) a procatalyst according to the present invention, as defined above and (II) an activating cocatalyst.

Still another aspect of the invention is to provide a process for producing linear low density polyethylene having a density between 905 and 935 kg/m³, which process comprises:
- introducing a procatalyst according to the present invention as described above into the polymerisation reactor
- introducing a cocatalyst capable of activating the said procatalyst into the polymerisation reactor
- introducing ethylene, alpha-olefin comonomers having 3 to 20 carbon atoms and optionally hydrogen into the polymerisation reactor
- maintaining said polymerisation reactor in such conditions as to produce an ethylene copolymer having a density between 905 and 935 kg/m³, and
- recovering said ethylene copolymer

### Detailed Description of the Invention

In the following the invention is described more in detail.

### Inorganic support (a)

The inorganic support used in the invention may be any suitable support, which has the proper chemical and physical properties to act as a support for the active component of the procatalyst. The support material preferably has a suitable average particle size and particle size distribution, a high porosity and a large specific surface area. Especially good results are obtained if the support material has a specific surface area of between 100 and 1000 m²/g support and a pore volume of 1-3 ml/g support. The support material can optionally be chemically pre-treated, e.g. by silylation or by treatment with aluminium alkyls.

According to a preferable embodiment of the invention, the inorganic support is a mono-oxide or mixed oxide of an element selected from Groups 3-6 and 13-14 of the Periodic Table of the Elements (IUPAC 1990), preferably a mono-oxide or mixed oxide of silicon, aluminium, titanium, chromium and/or zirconium. More preferably, the inorganic support is a mono-oxide or mixed oxide of silicon and/or aluminium, most preferably silica.

The inorganic support may further contain additional compounds. Especially useful is a silica support material comprising magnesium halide in such an amount that the support contains 1 - 20 %, preferably 2 - 6 % by weight magnesium, as disclosed in WO 99/51646.

Usually, the support is dried before impregnating it with other catalyst components. Further, the amount of hydroxyl groups, which appear on the surface of most inorganic oxides may be reduced by heat-treatment and/or chemical treatment. Good results are e.g. achieved by treating the support with heat at 100-900 °C, preferably 400-800 °C, for a sufficient time to reduce the hydroxyl groups on the surface to a lower level. Preferably, the treated support contains at the most 2.0 mmol and more preferably at most 1.0 mmol of hydroxyl groups/g of support.

### Aluminium compound (b)

The aluminium compound used in the step (b) has the formula (1). The aluminium compound comprises an organic group, chlorine and aluminium, whereby it is assumed that it both chlorinates the surface of the support and partly acts as a cocatalyst precursor. However, it is not intended as a cocatalyst, but the catalyst system presupposes large amounts of a separate cocatalyst, see below. Preferably, the compound is an alkyl aluminium dichloride or alkyl aluminium sesquichloride. Especially preferred compounds are an ethyl aluminium dichloride and ethyl aluminium sesquichloride. Of these, ethyl aluminium dichloride is particularly preferred.

It is recommendable to contact the aluminium compound directly or indirectly with the support in the form of a solution, which penetrates the pores of the support and reacts with as many of the surface groups or earlier deposited reagent molecules as possible. Thus, according to one embodiment, said aluminium compound may be contacted with said inorganic support so that the aluminium compound is in hydrocarbon solution, preferably in a 5-25 w-% hydrocarbon solution, the viscosity of which most preferably is below 10 mPa·s. Suitable solvents are C₅-C₈ alkanes such as pentane, hexane and heptane.

When contacting the aluminium compound with an inorganic support having surface hydroxyl groups, such as silica, the molar ratio between the aluminium compound and the surface hydroxyls of the inorganic support is preferably between 1 and 4. The preferred contacting temperature is between 0 and 110°C.

It is possible, however, when a mixture of aluminium compounds is used, that one of the aluminium compounds is an aluminium trialkyl, such as triethylaluminum, tri-isobutylaluminum and like. However, at least one of the aluminium compounds (d) should have the formula (1).

### Magnesium compound (c)

The compound or mixture containing hydrocarbyl and/or hydrocarbyl oxide linked to magnesium used in step (c) may be any suitable mixture comprising one or more magnesium compound. Thus, it may be a magnesium dialkyl, such as butyl-octyl-magnesium, butyl-ethyl magnesium, diethyl magnesium or dibutyl magnesium. If the magnesium compound used in step (c) is a magnesium dialkyl, then it is preferred to use a halogen splitting compound in combination with the magnesium compound. Preferred halogen splitting compounds are silicon tetrahalides, in particular silicon tetrachloride.

The magnesium compound may also be a magnesium dialkoxy compound. Then, the compound has a general formula Mg(OR)₂, where either R is independently a C₂-C₁₆ alkyl. Preferred such compounds are compounds where R is a C₆-C₁₂ alkyl group. In particular, the compound where R is 2-ethyl-1-hexanol or 2-methyl-1-pentanol is preferred.

One of the purposes of the invention is to obtain a high activity procatalyst despite high hydrogen concentrations. Then the magnesium component of the procatalyst may have both Mg-C bonds and Mg-O-C bonds. These bonds may be in the same magnesium compound such as RMgOR, or in different magnesium compounds. Thus mixtures of R₂Mg and Mg(OR)₂ are within the scope of the invention, as well as mixtures of R₂Mg and RMgOR and mixtures of RMgOR and Mg(OR)₂. Preferably, the compound or mixture containing hydrocarbyl and hydrocarbyl oxide linked to magnesium is hydrocarbon soluble, which gives a solution capable of effectively penetrating the voids and pores of the support.

According to one embodiment of the present invention, said compound or mixture containing hydrocarbyl and hydrocarbyl oxide linked to magnesium may be a contact product of a di-C₁-C₁₀ alkyl magnesium and a C₁-C₁₂ alcohol. Preferably, the di-C₁-C₁₀ alkyl magnesium is dibutyl magnesium, butyl ethyl magnesium, diethyl magnesium or butyl octyl magnesium. Preferably, the C₁-C₁₂ alcohol is a branched alcohol, preferably a 2-alkyl alkanol, most preferably 2-ethyl-1-hexanol or 2-methyl-1-pentanol.

When the compound or mixture containing hydrocarbyl and hydrocarbyl oxide linked to magnesium is a contact product of a di-C₁-C₁₀ alkyl magnesium and a C₁-C₁₂ alcohol, the corresponding molar ratio di-C₁-C₁₀ alkyl magnesium to C₁-C₁₂ alcohol is preferably 1:1.3 - 1:2.2, more preferably 1:1.78 - 1:1.99, most preferably 1:1.80 - 1:1.98.

In the case, where the procatalyst is prepared by contacting the compound or mixture comprising hydrocarbyl and hydrocarbyl oxide linked to magnesium with said first reaction product, the compound or mixture comprising hydrocarbyl and hydrocarbyl oxide linked to magnesium is preferably in a nonpolar hydrocarbon solution, most preferably in a nonpolar hydrocarbon solution the viscosity of which is below 10 mPa·s at the room temperature. The viscosity can be advantageously reduced by adding an aluminium alkyl compound to the solution. The aluminium alkyl may have the formula (1) or it may be an aluminium trialkyl. The reduced viscosity allows a thorough penetration of the magnesium component into the voids and pores of the support is attained. This improves the morphology of the procatalyst and thus the morphology of the poly-C₂-C₁₀ olefins prepared by it, as well.

When contacting the compound or mixture comprising hydrocarbyl and hydrocarbyl oxide linked to magnesium, good deposition on the surface of the support is obtained if the volume of solution comprising the compound or mixture containing hydrocarbyl and hydrocarbyl oxide linked to magnesium is about two times the pore volume of the support material. This is achieved if the concentration of the complex in the hydrocarbon solvent is 5-60% with respect to the hydrocarbon used as solvent. The solvent may be a C₅-C₈ alkane and/or an aromatic C₆-C₁₂ hydrocarbon, e.g. a mixture of a major amount of pentane, hexane or heptane and a minor amount of e.g. toluene.

### Titanium compound (d)

One of the main catalyst components is the titanium compound, which is assumed to form the active centre during the polymerisation of the C₂-C₂₀ olefins. Typical useful titanium compounds are the mixed alkoxy chlorides and chlorides of tetravalent titanium. The most preferable titanium compound is titanium tetrachloride.

### Electron donor compound (e)

The electron donor compound is a compound containing an electronegative atom or group. Useful electron donor compounds are those containing oxygen, sulphur or nitrogen atoms. Preferably, the electron donor compound is selected from the group of benzoates, phthalates, diethers and succinates.

Especially useful electron donor compounds include ethyl benzoate, methyl benzoate, monoethyleneglycol benzoate, diethyleneglycol benzoate, triethyleneglycol benzoate, diethyl phthalate, dipropyl phthalate, diisobutyl phthalate, dioctyl phthalate, 1,3-propyldimethoxy and 1,3-propyldiethoxy.

### Preferred amounts of compounds

The amount of support, aluminium compound(s), compound or mixture comprising hydrocarbyl and hydrocarbyl oxide linked to magnesium and titanium compound used in the preparation of the procatalyst may be varied and optimised in order to obtain the best results possible. However, the following amounts are preferable.

In the preparation of the procatalyst, the molar ratio between said aluminium compound(s) (d) to said aluminium compound (b) is preferably 0 - 5, preferably 0 - 2, most preferably 0 - 1.5.

The molar ratio of said titanium compound (d) to said aluminium compound(s) (b), measured as mol Ti/mol Al, is preferably 0.1 - 5, more preferably 0.1 - 2, most preferably 0.1 - 1.0. When adjusting the ratio of titanium to aluminium, the molecular weight distribution of the polymer and the hydrogen response of the catalyst can be influenced. With hydrogen response is here meant the effect hydrogen has on the average molecular weight of the polymer produced by the catalyst. A strong hydrogen response means that a change in hydrogen content has a strong effect on the average molecular weight of the polymer. A high Ti/Al ratio (of more than about 0.5) produces a catalyst with a strong hydrogen response, which in polymerisation produces a polymer with a narrow molecular weight distribution. On the other hand a low Ti/Al ratio (of less than about 0.5) produces a catalyst with a weak hydrogen response, which in polymerisation produces polymer with a broad molecular weight distribution. The amount of said aluminium compound (b) relative to the mass of the inorganic support, measured as mmol Al/g, is preferably 0.1 - 100 mmol/g, more preferably 0.5 - 10 mmol/g, most preferably 1.0 - 5.0 mmol/g.

The amount of said magnesium compound (c) relative to said aluminium compound (b), expressed as mol Mg/mol Al, is preferably 0.1 to 5.0, more preferably 0.1 to 2.0 and in particular 0.5 to 1.5.

The amount of said electron donor compound (e) to said titanium compound (d), expressed as mol ED/mol Ti, is preferably of from 0.005 to 10, more preferably of from 0.01 to 10 and in particular of from 0.05 to 2.0.

### Preparation methods

The contacting of components (a) - (e) may be conducted using any suitable method for producing the procatalyst.

Preferably, all the steps of contacting the components (a) to (e) are conducted either in a hydrocarbon solvent, which does not contain any heteroatoms, such as oxygen, nitrogen, sulphur or halogen, or without any additional solvent.

More preferably, the solvent is a low-boiling compound containing from five to eight carbon atoms, which easily can be removed from the solid catalyst component. Such compounds are, among others, pentanes, hexanes, heptanes, octanes, cyclopentanes, cyclohexanes, cycloheptanes and some aromatic compounds, such as toluene. Especially preferred solvents are n-pentane or n-hexane.

One suitable method is to contact the support (a) sequentially with the compounds (b) to (e) in a preferred order. Such preparation methods have been disclosed e.g. in EP 688794, WO 99/51646 or WO 00/44795.

Alternatively, the compounds (b) to (e) may be contacted in solution and the resulting solution is impregnated on the support, as disclosed in WO 01/55230.

Alternatively still, the compounds (b) and (c) may be contacted in solution and the resulting solution is impregnated on the support. Thereafter, the compounds (d) and (e) are impregnated to the said support containing the compounds (b) and (c). Also this method is disclosed in WO 01/55230.

Especially it is preferred to form a solid intermediate containing the compounds (b) and (c) on the support (a) in any of the methods described above. Then, the electron donor (e) is impregnated on the intermediate component. This impregnation product is then contacted with the titanium compound (d) to produce the procatalyst.

Another especially preferred method is to form the intermediate containing the compounds (b) and (c) on the support (a) as before, and then contact this intermediate with the titanium compound (d). This contact product is then further contacted with the electron donor (e) to produce the procatalyst.

The procatalyst may be washed after any state of the synthesis, using methods known in the art, such as filtering or decanting. Thus, a wash stage may be performed after the treatment with the electron donor, after the titanation treatment and/or as a last step of the synthesis. Inert hydrocarbons, such as pentane, hexane or heptane, may be used as wash liquids.

### Cocatalyst

The above described procatalyst for the polymerisation of C₂-C₂₀ olefins is combined with a cocatalyst so that it can be used in a polymerisation process. The cocatalyst is an organometallic compound of formula R₃Al, where R is a C₁ to C₂₀ alkyl group or isoprenyl group. Examples of suitable aluminium alkyls are trimethyl aluminium, triethyl aluminium, tri-n-octyl aluminium and isoprenyl aluminium. Especially triethylaluminium is preferred. Alternatively, the cocatalyst may be a mixture of compounds selected from the group consisting of tri-C₁-C₁₀ alkyl aluminium compounds, where one of the components comprises short-chained alkyl groups (1 - 3 carbon atoms) and the other component comprises long-chained alkyl groups (4 - 20 carbon atoms). Examples of suitable aluminium alkyls comprising short-chained alkyl groups are trimethyl aluminium and in particular, triethyl aluminium. Examples of suitable components comprising long-chained alkyl groups are tri-n-octyl aluminium and in particular isoprenyl aluminium. In particular, the cocatalyst is a mixture of isoprenyl aluminium and triethyl aluminium or isoprenyl aluminium and trimethyl aluminium.

In the C₂-C₂₀ olefin polymerization catalyst system according to the present invention, the molar ratio between the aluminium in said cocatalyst and the titanium of said procatalyst is preferably 1:1 - 100: 1, more preferably 2:1 - 50:1 and most preferably 3:1 - 20:1.

It has been found that by using the procatalyst as described above, it is possible to produce an LLDPE polymer having a higher molecular weight than when using a procatalyst not containing the electron donor compound in the same reactor conditions. This is beneficial when producing bimodal LLDPE polymers. When the high molecular weight component of such polymers is produced, very low hydrogen concentration in the reactor is needed if the catalyst is very sensitive to hydrogen. In such case it is not possible to control the molecular weight of the polymer using hydrogen anymore. By using the procatalyst according to the invention, a catalyst having less sensitivity to hydrogen is produced, and thus the molecular weight of the polymer can better be controlled.

The procatalyst and the cocatalyst may be contacted with each other prior to their introduction into the polymerisation reactor. However, it is equally well possible to introduce the two catalyst components separately into the reactor.

### Polymerisation process

The procatalyst may be used in any conventional polymerisation process. Such processes include, among others, slurry polymerisation process, fluidised bed gas phase polymerisation process, agitated bed gas phase polymerisation process and solution polymerisation process. The catalyst component may also be used in a process which is a combination of the above mentioned processes.

Preferably, the procatalyst is used in gas phase copolymerisation of ethylene and alpha-olefin comonomers having 3 to 20 carbon atoms. Such a process can be operated in a stable fashion for a long period of time without agglomeration problems. Moreover, the melt flow rate and the density of the polyethylene can be controlled independently over wide ranges.

Most preferably, the procatalyst is used in a multi-step polymerisation process, in the steps of which different amounts of hydrogen are present as molecular weight regulating agent (so called chain transfer agent). Then, the polymer components produced in the two steps shall have different average molecular weights. The advantage of the catalyst system of the invention is that the in spite of the eventual carry-over of hydrogen into the second polymerisation stage, the polymer component produced in that stage has sufficiently high molecular weight. This allows controlling the properties of the final polymer composition.

The advantage of using the catalyst system of the invention becomes apparent when producing linear low density ethylene polymers, having a density of from about 905 to 935 kg/m³, preferably from 905 to 925 kg/m³. When using the catalyst system of the invention in producing this kind of polymer, the molecular weight of the resulting polymer can be controlled over a wide range and no fouling occurs in the reactor. Especially, if the polymerisation is conducted in a gas phase reactor, no chunking occurs.

A typical multi-step polymerization process is a two-stage process, in which the hydrogen pressures deviate considerably from each other. A broad molecular weight distribution is usually obtained. One such process has been described in EP-B-517 868.

In a particularly preferred multi-step process, ethylene is copolymerised with one or more C₃-C₂₀ olefins in the presence of a polymerisation catalyst comprising the components (a) to (e) described above in two or more polymerisation stages. In a first polymerisation stage a first homo- or copolymer component having a weight average molecular weight of from 5000 to 50000 g/mol and a comonomer content of from 0 to 5 mol-% is produced. In a second polymerisation stage a second copolymer component having a weight average molecular weight of from 300000 to 900000 g/mol and a comonomer content of from 2 to 10 mol-% is produced. The resulting polymer composition preferably comprises from 35 to 55 % by weight of the low molecular weight component and 45 to 65 % by weight of the high molecular weight component. It has preferably a weight average molecular weight of from 150000 to 350000 g/mol and a comonomer content of from 1 to 7 mol-%. The first and second polymerisation stages may be performed in any order and utilising any reactor configuration. It is preferred, however, to conduct the first polymerisation stage in a loop reactor and the second polymerisation stage in the gas phase reactor. Then it is preferred to continuously or intermittently introduce the procatalyst, cocatalyst, ethylene, hydrogen, optionally comonomer and diluent into the loop reactor, withdraw the slurry continuously or intermittently from the loop reactor, pass it into a separation stage to remove at least part of the hydrocarbons, and direct the first polymer component into the gas phase reactor, together with additional ethylene, comonomer and optionally hydrogen and an eventual inert gas to produce the second copolymer component. The resulting copolymer composition is then withdrawn from the gas phase reactor, either continuously or intermittently.

It should be understood that the multi-step process described above may include additional precontacting or prepolymerisation stages, where the catalyst is pre-treated or prepolymerised before it is introduced into the first polymerization stage. A process including a prepolymerisation stage has been described in WO-A-96/18662.

In the polymerization process, said C₃-C₂₀ olefin monomer may be any monomer having from three to twenty carbon atoms, such as propylene, 1-butene, isobutene, 3-methyl-1-butene, 1-hexene, 4-methyl-1-pentene, 4,4-dimethyl-1-pentene, vinylcyclohexane, cyclopentene, cyclobutene and norbomene. Most preferably, said C₃-C₂₀ olefin is a C₃-C₁₀-α-olefin.

### Examples

### Experimental methods

The melt flow rate (MFR) of the polymer has been measured by using the method ISO 1133 at 190 °C. The load under which the measurement has been made is denoted as a subscript, i.e. MFR₂₁ has been measured at 190 °C under a load of 21.6 kg.

Density of the polymer has been measured by using the method ISO 1183-1987.

Xylene soluble fraction of the polymer has been measured by using the method ISO 6427.

Bulk density of the polymer has been measured by using the method ASTM D 1895V.

### Catalyst Examples

### Example 1a (Preparation of Complex)

7.9 g (60.8 mmol) of 2-ethyl-1-hexanol was added slowly to 27.8 g (33.2 mmol) of 19.9% butyl-octyl-magnesium. The reaction temperature was kept under 35 °C. This complex was used in the following catalyst preparations. 2-ethyl-1-hexanol/butyl-octyl-magnesium molar ratio is 1.83:1.

### Example 1b (Preparation of the Solid Catalyst Component)

Onto 1 gram of silica support SP9-275 sold and manufactured by Grace, having an average particle size of 20 µm and which had been activated at 600 °C for 6 hours, 1.6 mmol of EADC was introduced. The mixture was stirred for 2 hours at 20 °C. Then, an amount of magnesium complex prepared according to Example 1a, corresponding to 1.4 mmol of magnesium, was introduced onto the support. The mixture was stirred for 3.5 hours at 20 - 40 °C. Then, 0.14 mmol ethyl benzoate was introduced onto the support. The mixture was stirred for 2 hours at 20 - 40 °C. Finally, 0.7 mmol TiCl₄ was introduced onto the support. The mixture was stirred overnight at 45 °C. The catalyst was then dried for 2.5 hours at 45 - 70 °C and recovered.

### Example 2

The catalyst was prepared according to the description of Example 1b, except that the amount of ethyl benzoate was 0.35 mmol.

### Example 3

The catalyst was prepared according to the description of Example 1b, except that the amount of ethyl benzoate was 0.7 mmol.

### Example 4

The catalyst was prepared according to the description of Example 1b, except that the order of the addition of titanium component (e) and electron donor (f) was reversed.

### Example 5

The catalyst was prepared according to the description of Example 4, except that the amount of ethyl benzoate was 0.35 mmol.

### Example 6

The catalyst was prepared according to the description of Example 4, except that the amount of ethyl benzoate was 0.7 mmol.

### Example 7 (Comparative)

The catalyst was prepared according to the description of Example 1b, except that ethyl benzoate was not added onto the procatalyst.

Polymerisation Examples

### Example 8

The solid catalyst component prepared in Example 1b was used in ethylene polymerisation. Ethylene was polymerised in pentane slurry in following conditions:
- Reactor volume: 31
- Amount of n-pentane (at 25 °C): 1.8 dm³
- Amount of 1-butene (at 25 °C): 100 cm³
- Amount of catalyst: 100 mg
- Al/Ti-ratio (Cocatalyst/catalyst): 15 mol/mol
- Polymerization temperature: 90 °C
- Amount of hydrogen (in 500 ml vessel at 25 °C): 500 kPa
- Partial pressure of pentane in the polymerization temperature: 440 kPa
- Total pressure kept with continuous ethylene feed: 1440 kPa
- Polymerization time: 1 hour

The measured amount of n-pentane was filled into the reactor at the room temperature after which the temperature was increased to 90 °C. Then the catalyst components were injected into the reactor. After that ethylene was introduced into the reactor through the hydrogen- and comonomer-charging vessels. Triethyl aluminium was used as cocatalyst.

### Example 9

The procedure of Example 8 was repeated except that the solid catalyst component was produced according to Example 2.

### Example 10

The procedure of Example 8 was repeated, except that the solid catalyst component was produced according to Example 3.

### Example 11

The procedure of Example 8 was repeated, except that the solid catalyst component was produced according to Example 4.

### Example 12

The procedure of Example 8 was repeated, except that the solid catalyst component was produced according to Example 5.

### Example 13

The procedure of Example 8 was repeated, except that the solid catalyst component was produced according to Example 6.

### Example 14 (comparative)

The procedure of Example 8 was repeated, except that the solid catalyst component was produced according to Example 7.

### Polymerization results

**Table 2**

| Laboratory polymerization results | | | | | | | |
|---|---|---|---|---|---|---|---|
| Catalyst | Ex 8 | Ex 9 | Ex 10 | Ex 11 | Ex 12 | Ex 13 | Ex 14 |
| ED/Ti, mol/mol | 0.2 | 0.5 | 1.0 | 0.2 | 0.5 | 1.0 | 0.0 |
| Activity, kg PE/g cat | 9.9 | 8.7 | 4.1 | 6.5 | 6.2 | 3.4 | 6.3 |
| Density, kg/m³ | 923 | 925 | 926 | 925 | 926 | 927 | 924 |
| MFR₅ | 1.9 | 1 | 0.56 | 0.88 | 0.82 | 0.48 | 2.5 |
| MFR₂₁ | 14 | 8.3 | 4.8 | 7.3 | 7.2 | 4.2 | 18.5 |
| MFR₂₁/MFR₅ | 7.4 | 8.2 | 8.6 | 8.3 | 8.7 | 8.7 | 7.3 |
| BD | 325 | 322 | | 349 | | 382 | 383 |
| XS (wt-%) | 2.0 | 1.3 | 1.1 | 0.7 | 0.7 | 0.8 | 3.4 |

The examples show that when the electron donor compound is present in the catalyst the melt index of the polymer is reduced (meaning that the average molecular weight is increased) and the xylene soluble fraction of the polymer is reduced compared to a catalyst containing no electron donor.

## Claims

1. A process for producing a procatalyst for the production of linear low density ethylene polymers, wherein the process comprises the steps of contacting: (a) an inorganic support, (b) an aluminium compound, or mixtures thereof of the formula (1):
R₃₋ₙAlClₙ (1)
wherein R is a C₁-C₂₀ hydrocarbyl group or a C₁-C₂₀ hydrocarbyloxy group and n is a number in the range of and including 1 to 2, (c) a compound or mixture comprising hydrocarbyl and/or hydrocarbyl oxide linked to magnesium, (d) a titanium compound having the formula (2):
(OR')₄₋ₓTiClₓ (2)
wherein R' is a C₂-C₂₀ hydrocarbyl group and x is an integer from 0 to 4, and (e) an electron donor compound selected from the group of benzoates, phthalates, diethers and succinates.

2. The process according to Claim 1, wherein the compound or mixture comprising hydrocarbyl and/or hydrocarbyl oxide linked to magnesium has been prepared by contacting di-C₁-C₁₀ alkyl magnesium and a C₁-C₁₂ alcohol.

3. The process according to Claim 2, wherein the molar ratio of the di-C₁-C₁₀ alkyl magnesium to the C₁-C₁₂ alcohol is between 1:1.33 and 1:2.2.

4. The process according to any one of Claims 1 to 3, wherein the particulate inorganic support is silica.

5. The process according to any one of Claims 1 to 4, wherein first the components (a) to (c) are contacted in any order and then the resulting product is first contacted with the titanium compound (d) and then with the electron donor (e).

6. The process according to any one of Claims 1 to 4, wherein first the components (a) to (c) are contacted in any order and then the resulting product is first contacted with the electron donor (e) and then with the titanium compound (d).

7. The process according to any one of the claims 1 to 6, wherein all the steps of contacting the components (a) to (e) are conducted either in a hydrocarbon solvent, which does not contain any heteroatom, such as oxygen, nitrogen, sulphur or halogen, or without any additional solvent.

8. A procatalyst for the production of linear low density ethylene polymers, wherein the procatalyst is obtainable by the process of any one of the Claims 1 to 7.

9. A polymerisation catalyst comprising (I) a procatalyst according to Claim 8 and (II) an activating cocatalyst.

10. A process for producing linear low density polyethylene having a density between 905 and 935 kg/m³, which process comprises:
- introducing a procatalyst according to Claim 8 into the polymerisation reactor
- introducing a cocatalyst capable of activating the said catalyst component into the polymerisation reactor
- introducing ethylene, alpha-olefin comonomers having 3 to 20 carbon atoms and optionally hydrogen into the polymerisation reactor
- maintaining said polymerisation reactor in such conditions as to produce an ethylene copolymer having a density between 905 and 935 kg/m³, and
- recovering said ethylene copolymer

11. The process according to Claim 10, wherein the polymerisation is conducted in a gas phase reactor.

12. The process according to Claim 10, wherein the polymerisation is conducted in two stages.

13. The process according to Claim 12, wherein in the first polymerisation stage a first polymer component having a weight average molecular weight of from 5000 to 50000 g/mol and a comonomer content of from 0 to 5 mol-% is produced and in a second polymerisation stage a second copolymer component having a weight average molecular weight of from 300000 to 900000 g/mol and a comonomer content of from 2 to 10 mol-% is produced.

14. The process according to Claim 13, wherein the resulting copolymer composition comprises from 35 to 55 % by weight of the first polymer component and 45 to 65 % by weight of the second copolymer component.

15. The process according to any one of the claims 12 or 14, wherein the resulting copolymer composition has a weight average molecular weight of from 150000 to 350000 g/mol and a comonomer content of from 1 to 7 mol-%.
